(19) Europäisches Patentamt
European Patent Office
Office européen des brevets

(11) **EP 2 156 910 A1**

(12) **EUROPEAN PATENT APPLICATION**

(43) Date of publication:
24.02.2010 Bulletin 2010/08

(21) Application number: 09010659.2

(22) Date of filing: 19.08.2009

(51) Int Cl.:
*B22F 9/24* (2006.01)      *B22F 1/00* (2006.01)
*G02B 5/30* (2006.01)      *G02F 1/13363* (2006.01)
*C23C 18/24* (2006.01)      *G02F 1/1335* (2006.01)

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 20.08.2008 JP 2008211940

(71) Applicant: Fujifilm Corporation
Tokyo 106-8620 (JP)

(72) Inventor: Matsunami, Yuki
Kanagawa (JP)

(74) Representative: HOFFMANN EITLE
Patent- und Rechtsanwälte
Arabellastrasse 4
81925 München (DE)

(54) **Composite metal nanorod, composite metal nanorod-containing composition, and polarization material**

(57)    A composite metal nanorod, including a core nanorod and a shell, the core nanorod being covered with the shell to form a core-shell structure, wherein the composite metal nanorod contains at least two different metals, and wherein the composite metal nanorod has an equivalent-volume-sphere radius of 15 nm or smaller and has an aspect ratio of 1.1 to 10.

## FIG. 1

**Description**

BACKGROUND OF THE INVENTION

Field of the Invention

The present invention relates to a dichroic composite metal nanorod having a uniform size, exhibiting less light scattering, and being excellent in heat resistance and oxidation resistance; a composite metal nanorod-containing composition; and a polarization material.

Description of the Related Art

Inorganic materials exhibiting dichroic property and absorbing light in the visible and near infrared regions include gold nanorods having an aspect ratio of 2 to 5. Many literatures disclose synthesis methods for uniformly-sized nanorods capable of absorbing light in a specific wavelength region. The gold nanorods absorb, in their minor axes, light having a wavelength of about 530 nm (i.e., light having a high luminosity factor) and thus, are not suitable for common optical applications requiring colorless transparency with respect to light of the visible light region.

Meanwhile, silver nanorods absorb, in their minor axes, light having a wavelength of 410 nm (i.e., light having a wavelength near a border of the visible region). In addition, they have a mole absorption coefficient greater than that of gold nanorods and thus, are more suitable for common optical applications. Unlike gold nanorods, no reports have been presented on a method for synthesizing uniformly-sized silver nanorods at high yield. One synthesis method for silver nanorods employs a surfactant and is described in Chem. Comm., 7 (2001) (pp. 617 and 618). This method poses problems in that synthesized silver nanorods have low size uniformity, are large in size, and have poor oxidation resistance.

Metal nanoparticles having absorption characteristics comparable to uniformly-sized silver nanorods are, for example, gold-silver composite metal nanorods composed of gold nanorods and silver precipitated thereon (see J. Phys. Chem. B, 108 (2004), pp. 5,882 to 5,888). The gold-silver composite metal nanorods exhibit absorption characteristics almost similar to those of silver nanorods having the same aspect ratio; i.e., have excellent size uniformity and dichroic property. However, the gold-silver composite metal nanorods synthesized in the method described in J. Phys. Chem. B, 108 (2004), pp. 5,882 to 5,888 are large in size and considerably scatter light, and thus, are not suitable for optical applications. Moreover, since a dispersion of the gold-silver composite metal nanorods contains a large amount of surfactant, the remaining surfactant even after purification is precipitated during film formation, resulting in that the formed film may problematically degrade in transparency.

Also, Japanese Patent Application Laid-Open (JP-A) No. 2004-256915 proposes composite metal colloid particles made of two metals selected from gold, silver and copper. But, the composite metal colloid particles have an aspect ratio of 1; i.e., have a spherical shape, and do not exhibit dichroic property.

BRIEF SUMMARY OF THE INVENTION

The present invention solves the above existing problems and aims to achieve the following objects. Specifically, an object of the present invention is to provide composite metal nanorods which are suitably used for common optical applications requiring colorless transparency with respect to light of the visible light region, which have a uniform size, which exhibit dichroic property, which have core-shell structures whose end surfaces (caps) are rounded and have no corners, and which are improved in oxidation and heat resistances; a composite metal nanorod-containing composition; and a polarization material.

Means for solving the above-described problems are as follows.

< 1 > A composite metal nanorod, including:

a core nanorod, and
a shell,
the core nanorod being covered with the shell to form a core-shell structure,

wherein the composite metal nanorod contains at least two different metals, and
wherein the composite metal nanorod has an equivalent-volume-sphere radius of 15 nm or smaller and has an aspect ratio of 1.1 to 10.
< 2 > The composite metal nanorod according to < 1 > above, wherein both end surfaces of the composite metal nanorod are rounded and have no corners.

< 3 > The composite metal nanorod according to < 2 > above, wherein the composite metal nanorod satisfies the expression L ≤ 0.9B, where L denotes a length of a portion of the end surface of the composite metal nanorod, the portion being in contact with a perpendicular line to a major axis of the composite metal nanorod; and B denotes a length of a minor axis of the composite metal nanorod.

< 4 > The composite metal nanorod according to any one of < 1 > to < 3 > above, wherein a shell metal of the shell is baser than a core metal of the core nanorod.

< 5 > The composite metal nanorod according to < 4 > above, wherein the core metal is any of gold, platinum and palladium, and the shell metal is any of silver, copper and aluminum.

< 6 > The composite metal nanorod according to any one of < 1 > to < 5 > above, wherein a ratio by volume of the shell to the core nanorod (shell/core nanorod) is 0.1 to 130.

< 7 > The composite metal nanorod according to any one of < 1 > to < 6 > above, wherein the core nanorod has an equivalent-volume-sphere radius of 10 nm or smaller and has an aspect ratio of 1.5 to 24.

< 8 > A composite metal nanorod-containing dispersion, including:

the composite metal nanorod according to any one of < 1 > to < 7 > above.

< 9 > A composite metal nanorod-containing composition, including:

a binder, and
the composite metal nanorod according to any one of < 1 > to < 7 > above.

< 10 > A polarization material including:

the composite metal nanorod-containing composition according to < 9 > above.

< 11 > The polarization material according to < 10 > above, wherein the polarization material is a film made of the composite metal nanorod-containing composition, which film is stretched so that a major axis of the composite metal nanorod is oriented in a direction in which the film is stretched.

The present invention can provide composite metal nanorods which are suitably used for common optical applications requiring colorless transparency with respect to light of the visible light region, which have a uniform size, which exhibit dichroic property, which have core-shell structures whose end surfaces (caps) are rounded and have no corners, and which are improved in oxidation and heat resistances; a composite metal nanorod-containing composition; and a polarization material. These can solve the above existing problems.

BRIEF DESCRIPTION OF THE DRAWINGS

FIG. 1 is an exemplary, schematic view of a composite metal nanorod of the present invention.
FIG. 2 is an exemplary, schematic view of a core nanorod of a composite metal nanorod.
FIG. 3 is a transmission electron microscope (TEM) image of gold nanorods synthesized in Example 1.
FIG. 4 is a graph of absorption spectrum of composite metal nanorods synthesized in Example 1.
FIG. 5 is a transmission electron microscope (TEM) image of composite metal nanorods synthesized in Example 1.
FIG. 6 is a transmission electron microscope (TEM) image of composite metal nanorods synthesized in Example 5.
FIG. 7 is a transmission electron microscope (TEM) image of composite metal nanorods synthesized in Comparative Example 1.
FIG. 8 is a transmission electron microscope (TEM) image of silver nanorods synthesized in Comparative Example 2.
FIG. 9 is a transmission electron microscope (TEM) image of composite metal nanorods synthesized in Comparative Example 6.
FIG. 10 is a graph in relation to polarization property of the polarization plate produced in Example 8.
FIG. 11A is used for describing a method in which whether or not end surfaces (caps) of a nanorod are rounded (without corners) is determined, and is an exemplary view of a shape of a nanorod observed through TEM, whose end surfaces are determined not to be rounded (with corners) based on that the length (L) of a portion of each end surface of the nanorod, the portion being in contact with a perpendicular line to a major axis thereof, is greater than 0.9B.
FIG. 11B is used for describing a method in which whether or not end surfaces (caps) of a nanorod are rounded (without corners) is determined, and is one exemplary view of a shape of a nanorod observed through TEM, whose end surfaces are determined to be rounded (without corners) based on that the length (L) of a portion of each end surface of the nanorod, the portion being in contact with a perpendicular line to a major axis thereof, is equal to or smaller than 0.9B.

FIG. 11C is used for describing a method in which whether or not end surfaces (caps) of a nanorod are rounded (without corners) is determined, and is another exemplary view of a shape of a nanorod observed through TEM, whose end surfaces are determined to be rounded (without corners) based on that the length (L) of a portion of each end surface of the nanorod, the portion being in contact with a perpendicular line to a major axis thereof, is equal to or smaller than 0.9B.

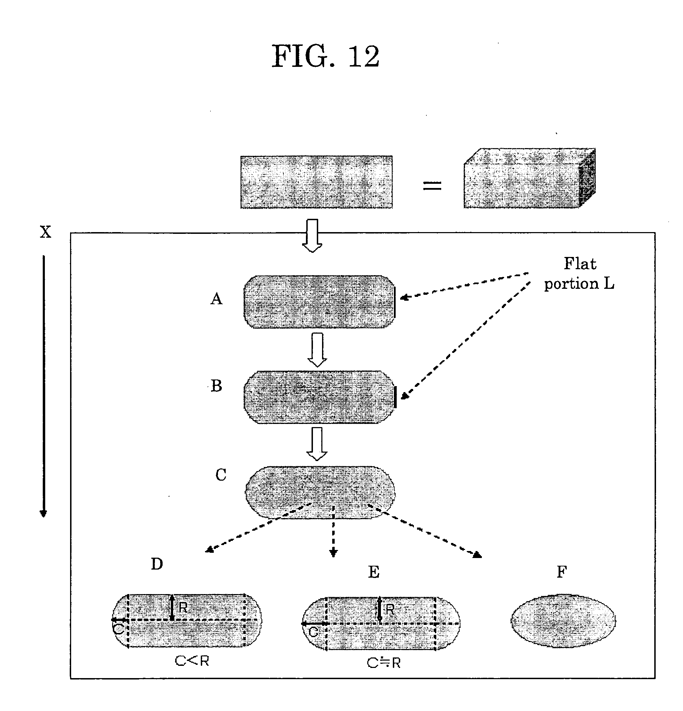

FIG. 12 shows projection images of nanorods obtained through TEM, wherein one of the projection images is that of a cuboid nanorod (single crystal) and the others are those of nanorods whose end surfaces are rounded (without corners) of the present invention; i.e., nanorods A to F, wherein nanorods A and B have polyhedral end surfaces (caps), nanorod C has spherical or ellipsoidal end surfaces (caps), nanorod D has ellipsoidal end surfaces (caps), nanorod E has spherical end surfaces (caps), and nanorod F has an ellipsoidal shape, wherein arrow X indicates that the end surfaces are gradually rounded in the order of the cuboid nanorod, nanorod A, nanorod B and nanorod C, and wherein when a flat portion L of the end surface (cap) of a nanorod is equal to or greater than 2 nm, the shape of the nanorod is approximated to be generally cuboid; and when a flat portion L of the end surface (cap) of a nanorod is smaller than 2 nm, the shape of the nanorod is approximated to be generally cylindrical.

FIG. 13A is an exemplary view of a composite metal nanorod of the present invention.
FIG. 13B is an exemplary view of a composite metal nanorod of the present invention.
FIG. 13C is an exemplary view of a composite metal nanorod of the present invention.
FIG. 13D is an exemplary view of a composite metal nanorod of the present invention.
FIG. 13E is an exemplary view of a composite metal nanorod of the present invention.
FIG. 13F is an exemplary view of a composite metal nanorod of the present invention.
FIG. 13G is an exemplary view of a composite metal nanorod of the present invention.
FIG. 13H is an exemplary view of a composite metal nanorod of the present invention.
FIG. 14A is an exemplary view of a composite metal nanorod which is not encompassed by the present invention.
FIG. 14B is an exemplary view of a composite metal nanorod which is not encompassed by the present invention.
FIG. 14C is an exemplary view of a composite metal nanorod which is not encompassed by the present invention.
FIG. 15 is a transmission electron microscope (TEM) image of composite metal nanorods which are not encompassed by the present invention.
FIG. 16 is a transmission electron microscope (TEM) image of composite metal nanorods which are not encompassed by the present invention.

DETAILED DESCRIPTION OF THE INVENTION

(Composite metal nanorod)

A composite metal nanorod of the present invention contains two different metals, and has a core-shell structure in which a core nanorod is covered with a shell.

The nanorod refers to a rod-like particle in which one axis is longer than the other axis; i.e., which has the major and minor axes.

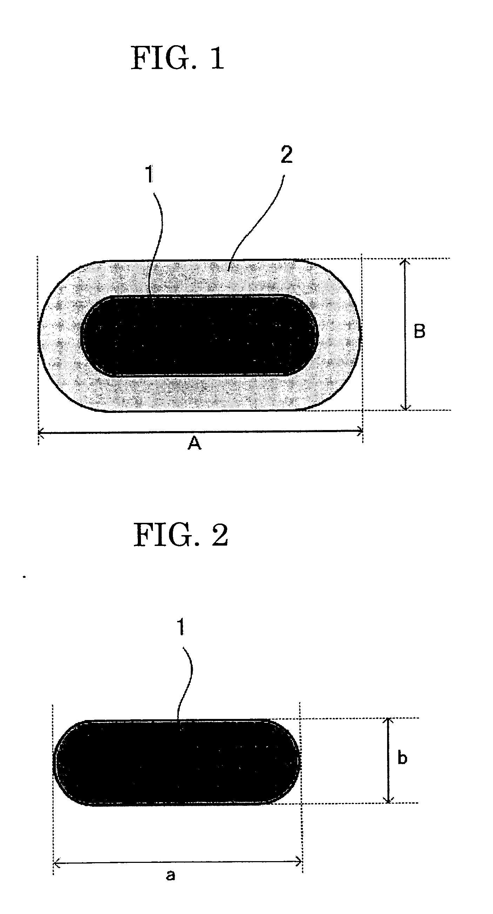

As shown in FIG. 1, the composite metal nanorod of the present invention has a core-shell structure in which a core nanorod 1 is covered with a shell 2. The aspect ratio of the composite metal nanorod shown in FIG. 1 is calculated by dividing a major axis length (hereinafter may be referred to as a "long diameter") A by a minor axis length (hereinafter may be referred to as a "short diameter") B (i.e., A/B). In the present invention, the aspect ratio of the composite metal nanorod is an average value of aspect ratios of 200 samples which are randomly selected under a transmission electron microscope (TEM).

The aspect ratio of the composite metal nanorod is 1.1 to 10. In order for the composite metal nanorod to absorb light of the visible light region, the aspect ratio is preferably 1.3 to 5. The composite metal nanorod having an aspect ratio lower than 1.1 may not exhibit sufficient dichroism property. The composite metal nanorod having an aspect ratio higher than 10 may not absorb light of a desired region; i.e., the visible and near-infrared regions.

The equivalent-volume-sphere radius (R) of the composite metal nanorod is 15 nm or smaller. It is preferably 13 nm or smaller from the viewpoint of reducing light scattering. The composite metal nanorod having an equivalent-volume-sphere radius (R) larger than 15 nm scatters light to a considerable extent and thus, a dispersion thereof and a composition containing it may degrade in transparency.

Here, the equivalent-volume-sphere radius (R) is a radius of a sphere whose volume is the same as that of the composite metal nanorod, and is calculated, depending on the shape of the composite metal nanorod, by the following equations.

That is, when the shape of the composite metal nanorod is generally cylindrical,

$$R = \sqrt[3]{3 \times A \times B \times B / 16}$$

where A denotes a major axis length of the composite metal nanorod, which length is obtained by measuring a length of the longest straight line between both ends of the composite metal nanorod; and B denotes a minor axis length of the composite metal nanorod, which length is obtained by measuring a width of the thickest part of the composite metal nanorod. Also, when the shape of the composite metal nanorod is generally cuboid,

$$R = \sqrt[3]{3 \times A \times B \times B / 4 / \pi}$$

where A and B have the same meanings as defined above.

Here, whether a shape of a composite metal nanorod is generally cylindrical or generally cuboid can be determined based on that of the composite metal nanorod observed with a transmission electron microscope (TEM). When a composite metal nanorod satisfies the expression $L \leq 0.2B$ (where L denotes a length of a flat portion of an end surface (cap) of the composite metal nanorod, and B denotes a minor axis length of the composite metal nanorod), a shape of the composite metal nanorod is generally cylindrical (e.g., a composite metal nanorod whose end surface is spherical (indicated by C or E in FIG. 12), that whose end surface is ellipsoidal (indicated by D in FIG. 12), and that having an ellipsoidal shape (indicated by F in FIG. 12)).

Meanwhile, when a composite metal nanorod satisfies the expression $0.2B < L \leq 0.9B$ (where L denotes a length of a flat portion of an end surface (cap) of the composite metal nanorod, and B denotes a minor axis length of the composite metal nanorod), a shape of the composite metal nanorod is generally cuboid (e.g., a composite metal nanorod whose end surface is polyhedral (indicated by A or B in FIG. 12)).

Notably, the length L of the flat portion of the end surface (cap) of the composite metal nanorod is identical to a below-described length L of a portion of an end surface of a composite metal nanorod, the portion being in contact with a perpendicular line to the major axis of the composite metal nanorod.

In the present invention, as shown in FIG. 1, both end surfaces of the composite metal nanorod are preferably rounded and have no corners from the viewpoint of attaining a sharp absorption peak width shown by the minor axis and improving dichroism property. Both the end surfaces of the composite metal nanorod refer to end surfaces of a nanorod in a major axis direction, and are preferably rounded (without corners). The present invention does not encompass a composite metal nanorod in which one end surface is rounded (without corners) but the other is not rounded (with corners).

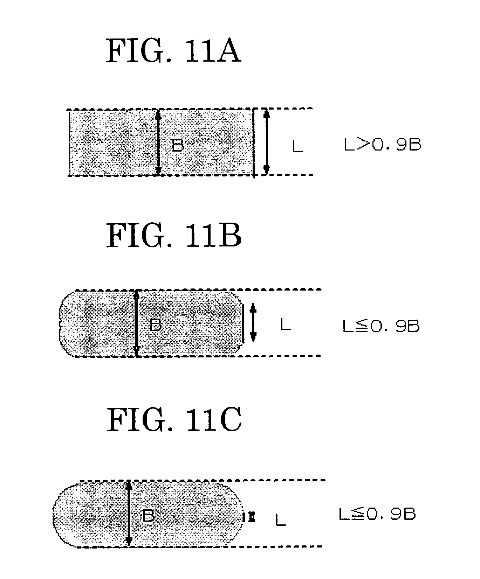

The rounded shape of the end surfaces is not particularly limited and may be appropriately determined depending on the purpose. It is, for example, spherical, ellipsoidal and polyhedral. Specifically, as shown in FIGs. 11A to 11C, both end surfaces of a composite metal nanorod are rounded preferably so that the expression $L \leq 0.9B$ is satisfied, more preferably so that the expression $L \leq 0.8B$ is satisfied. Here, in these expressions, L denotes a length of a portion of an end surface of a composite metal nanorod, the portion being in contact with a perpendicular line to a major axis of the composite metal nanorod; and B denotes a minor axis length of the composite metal nanorod. When L is greater than 0.9B, absorption shown by the minor axis may undesirably be broad.

The length L of a portion of an end surface of a composite metal nanorod, the portion being in contact with a perpendicular line to a major axis of the composite metal nanorod is an average value of major axes of 200 samples which are randomly selected under a transmission electron microscope (TEM).

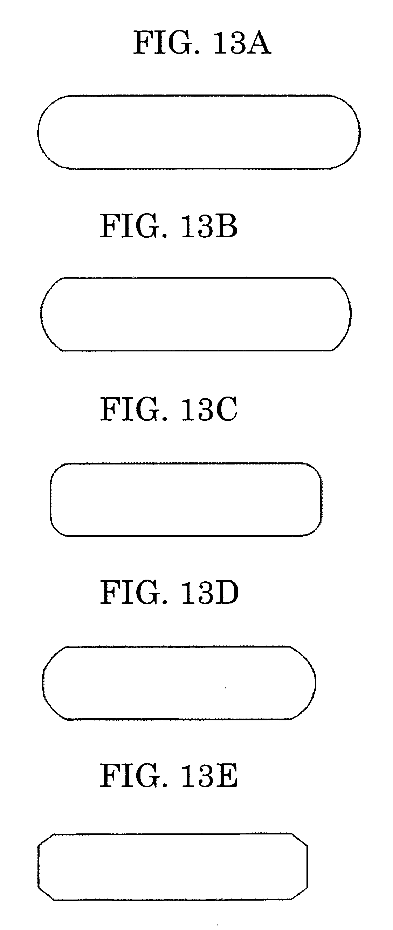

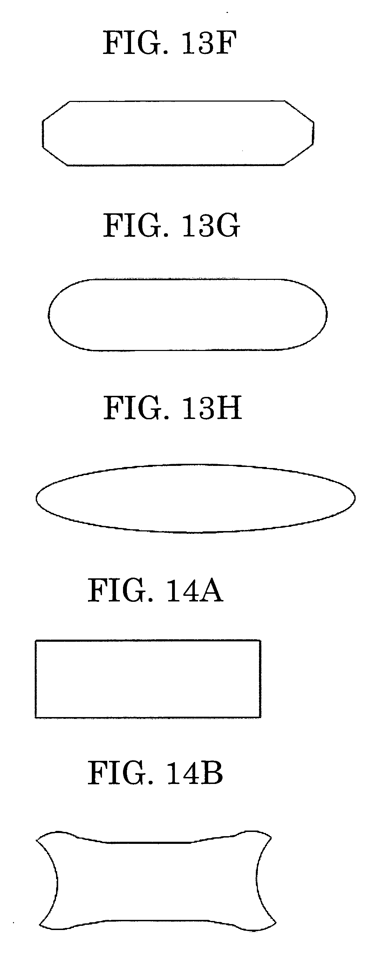

Composite metal nanorods whose end surfaces have shapes shown in FIGs. 13A to 13H, whose equivalent-volume-sphere radius is 15 nm or smaller, and whose aspect ratio is 1.1 to 10 are encompassed by the present invention.

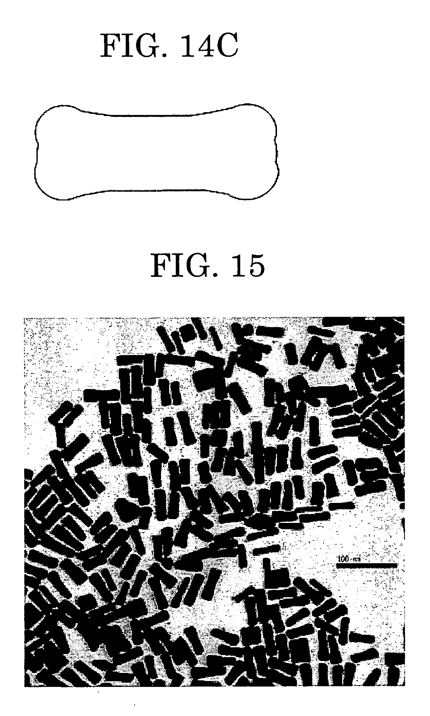

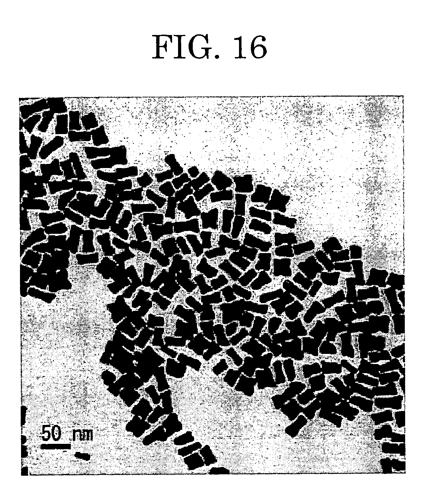

Meanwhile, composite metal nanorods whose end surfaces have shapes shown in FIGs. 14A to 14C, 15 and 16 are not encompassed by the present invention.

The composite metal nanorod of the present invention is not particularly limited, so long as it contains at least two different metals. Preferably, a core metal forming the core nanorod is different from a shell metal forming the shell. Notably, the core nanorod and the shell may individually contain two or more different metals.

The shell metal is preferably baser than the core metal. In other words, the reduction potential of the shell metal is higher than that of the core metal. The reduction potentials of the aforementioned metals are described in "*Kagaku Binran Kaitei 3 Han Kiso Hen II*" (Manual for Chemistry 3rd edition (revised), Basic II).

The reason why the shell metal is preferably baser than the core metal is as follows. Specifically, when the core metal is baser than the shell metal, the core metal is eluted during precipitation of the shell metal.

Examples of the core metal include gold, platinum and palladium, with gold being particularly preferred.

Examples of the shell metal include silver, copper and aluminum, with silver being particularly preferred.

Thus, the composite metal nanorod of the present invention is particularly preferably a gold core-silver shell nanorod whose core is made of gold and whose shell is made of silver.

The ratio by volume of the shell to the core nanorod (shell/core nanorod) is preferably 0.1 to 130. From the viewpoint of improvement in oxidation resistance, it is more preferably 1 to 40. When the volume ratio is smaller than 0.1, a core nanorod is not sufficiently covered with a shell metal, resulting in the shell metal may not sufficiently exhibit its optical characteristics. When the volume ratio is greater than 130, the formed composite metal nanorod may be oxidized.

Here, the ratio of $V_{shell}$ (i.e., the volume of the shell) to $V_{core}$ (i.e., the volume of core nanorod) (shell/core nanorod) is calculated, depending on the shapes of a composite metal nanorod and a core nanorod, by the following equations.

That is, when each of them is generally cuboid, $V_{shell} = (A \times B \times B) - V_{core}$ and $V_{core} = (a \times b \times b)$.

When each of them is generally cylindrical, $V_{shell} = (\pi \times A \times B \times B/4) - V_{core}$ and $V_{core} = (\pi \times a \times b \times b/4)$. where A and B have the same meanings as defined above; a denotes a major axis length of the core nanorod, which length is obtained by measuring a length of the longest straight line between both ends of the core nanorod; and b denotes a minor axis length of the core nanorod, which length is obtained by measuring a width of the thickest part of the core nanorod.

Notably, whether a shape of a composite metal nanorod or core nanorod is generally cylindrical or generally cuboid can be determined similar to the above description in relation to the equivalent-volume-sphere radius.

Here, in a core nanorod shown in FIG. 2, its aspect ratio is calculated by dividing major axis length a of the core nanorod by minor axis length b of the core nanorod (i.e., a/b). In the present invention, the aspect ratio of the core nanorod is an average value of aspect ratios of 200 samples which are randomly selected under a transmission electron microscope (TEM).

The aspect ratio of the core nanorod is preferably 1.5 to 24. In order for the formed composite metal nanorod to absorb light of the visible light region, the aspect ratio is preferably 1.5 to 10. When the aspect ratio is smaller than 1.5, the formed composite metal nanorod can be adjusted in absorption characteristics in a narrower range of the visible light region, which is disadvantageous. When the aspect ratio is greater than 24, a shell of shell metal is required to be thick in order for the formed composite metal nanorod to absorb light of the visible light region. As a result, the volume of the formed particles becomes large, potentially resulting in a drop in optical transparency of the formed composite metal nanorod.

The equivalent-volume-sphere radius (r) of the core nanorod is preferably 10 nm or smaller. In order for the formed composite metal nanorod to scatter light to a less extent and be improved in absorption characteristics, it is more preferably 8 nm or smaller. When the equivalent-volume-sphere radius (r) of the core nanorod is in excess of 10 nm, the formed composite metal nanorod scatters light to a considerable extent and thus, a dispersion thereof and a composition containing it may degrade in transparency.

The equivalent-volume-sphere radius (r) of the core nanorod is a radius of a sphere whose volume is the same as that of the core nanorod, and is calculated similar to the equivalent-volume-sphere radius of the composite metal nanorod.

In the present invention, a method for producing a composite metal nanorod is not particularly limited and may be appropriately selected depending on the purpose. The method includes a seed crystal forming step, a core nanorod forming step and a shell forming step; and, if necessary, includes other steps.

Seed crystal forming step -

The seed crystal forming step is a step of forming seed crystals by subjecting to reduction reaction a solvent containing a first metal compound.

- Core nanorod forming step -

The core nanorod forming step is a step of forming core nanorods by subjecting to reduction reaction a solvent containing seed crystals, a surfactant and a first metal compound.

Examples of the first metal compound include metal salts, metal complexes and organic metal compounds.

Examples of the metal contained in the first metal compound include gold, platinum and palladium, with gold being particularly preferred.

The acid forming the metal salts may be an inorganic or organic acid.

The inorganic acid is not particularly limited and may be appropriately selected depending on the purpose.

Examples thereof include nitric acid and hydrohalic acids (e.g., hydrochloric acid, hydrobromic acid and hydroiodic acid).

The organic acid is not particularly limited and may be appropriately selected depending on the purpose. Examples thereof include carboxylic acid and sulfonic acid.

Examples of the carboxylic acid include acetic acid, butyric acid, oxalic acid, stearic acid, behenic acid, lauric acid and benzoic acid.

Examples of the sulfonic acid include methylsulfonic acid.

Examples of the metal salts include silver nitrate, chloroauric acid and chloroplatinic acid.

The chelating agent used for forming the metal complexes is not particularly limited and may be appropriately selected depending on the purpose. Examples thereof include acetylacetonate and EDTA. Alternatively, the above metal salts and a ligand may form the metal complexes. Examples of the ligand include imidazole, pyridine and phenylmethylsulfide.

Notably, the metal compound encompasses acids of halogenated metal ion complexes (e.g., chloroauric acid and chloroplatinic acid) and alkali metal salts (e.g., sodium chloroaurate and sodium tetrachloropalladate). Shell forming step -

The shell forming step is a step of forming a shell on the core nanorod by subjecting to reduction reaction a solvent containing the core nanorod, a second metal compound, a surfactant and a vinylpyrrolidone compound.

Examples of the second metal compound include metal salts, metal complexes and organic metal compounds.

Examples of the metal contained in the second metal compound include silver, copper and aluminum, with silver being particularly preferred.

Other information of the metal salts, metal complexes and organic metal compounds serving as the second metal compound is similar to the above-described information of those serving as the first metal compound.

The reduction reaction is performed through, for example, heating of the solvent, photoreduction, addition of a reducing agent, and chemical reduction. Particularly preferably, it is performed by adding a reducing agent to the solvent.

Examples of the reducing agent include hydrogen gas, sodium borohydride, lithium borohydride, hydrazine, ascorbic acid, amines and thiols. Notably, the chemical reduction may be performed based on electrolysis.

The solvent is not particularly limited and may be appropriately selected depending on the purpose. Examples thereof include water; alcohol solvents such as methanol, ethanol, n-propanol, isopropanol, t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; amide solvents such as dimethylformamide and dimethylacetamide; nitrile solvents such as acetonitrile; ether solvents such as diethyl ether, dibutyl ether, tetrahydrofuran and dioxane; halogenated hydrocarbons such as chloroform, dichloromethane, carbon tetrachloride, dichloroethane, tetrachloroethane, methylene chloride, trichloroethylene, tetrachloroethylene and chlorobenzene; phenols such as phenol, p-chlorophenol, o-chlorophenol, m-cresol, o-cresol and p-cresol; aromatic hydrocarbons such as benzene, toluene, xylene, methoxybenzene and 1,2-dimethoxybenzene; carbon bisulfide; ethyl cellosolve; and butyl cellosolve. These solvents may be used alone or in combination.

Examples of the vinylpyrrolidone compound include polyvinylpyrrolidone (PVP) and 1-vinyl-2-pyrrolidone, with polyvinylpyrrolidone (PVP) being particularly preferred.

In the polyvinylpyrrolidone (PVP), the number of repeating units of pyrrolidone is preferably 85 or more, more preferably 300 to 12,000. When the number of repeating units of pyrrolidone is less than 85, PVP cannot adsorb on specific crystal faces of metal particles and then may undesireably become spherical particles.

The surfactant is not particularly limited and may be appropriately selected depending on the purpose. Examples thereof include cetyltrimethylammonium salts (e.g., cetyltrimethylammonium bromide (CTAB), cetyltrimethylammonium chloride (CTAC) and cetyltrimethylammonium hydroxide (CTAH)), octadecyltrimethylammonium salts, tetradecyltrimethylammonium salts, dodecyltrimethylammonium salts, decyltrimethylammonium salts, octyltrimethylammonium salts and hexyltrimethylammonium salts.

Cationic surfactants such as quaternary ammonium salts (e.g., cetyltrimethylammonium bromide (CTAB)) have bacteriocidal property and thus, concern about adverce effects on the environment (e.g., toxicity to aquatic organisms) arises. CTAB, therefore, must be recovered in the relavant step in powder form to reduce effects on the environment. For example, aqueous gold nanorod solution containing CTAB is left to stand at 5°C for 12 hours, and the precipitated CTAB crystals are separated through filtration with a filter fabric (#200). Through this treatment, about 75% of CTAB can be recovered in a solid state. If recovered during the course of nanorod production, CTAB can be reused. In addition, the time required for purification with an ultrafiltration membrane can be shortened, leading to reduction in production cost and effects on the environment.

The composite metal nanorod of the present invention may be covered with, in addition to a dispersing agent, a dielectric material made of metal oxide (e.g., silicon oxide, aluminum oxide and titanium oxide) and polymer (e.g., polyvinylpyrrolidone and polystyrene). Composite metal nanorod covered with such a dielectric material can be controlled in its absorption characteristics and can be provided with various properties such as thermal stability and oxidation resistance.

The dispersing agent is not particularly limited, so long as it is a compound capable of preventing nanorods from aggregation through charge repulsion and/or stearic hindrance with being adsorbed thereon and of imparting water-solubility and/or oil solubility to nanorods, and may be appropriately selected depending on the purpose.

Examples of the compound capable of preventing nanorods from aggregation through charge repulsion include high-molecular-weight ionic compounds and low-molecular-weight ionic compounds (e.g., quaternary ammonium compounds, sulfonic acid compounds, phosphoric acid compounds and carboxylic acid compounds). From them, a compound used can be selected in consideration of surface potential and/or pH conditions (acidity or basicity) of particles intended to be dispersed.

The compound capable of preventing nanorods from aggregation through stearic hindrance may contain a group for adsorbing on the particle surface and a moiety for stearic hindrance. Preferred examples of the group include S-containing functional groups (e.g., thiol, disulfide and sulfoxide); P-containing functional groups (e.g., phosphoric acid and phosphine); O-containing functional groups (e.g., carbonyl, carboxyl, ether and hydroxyl); and N-containing functional groups (e.g., amine, amino, ammonium, nitro, hydroxylamine, azo and imine). Specific examples include DISPERBIK-180, DISPERBIK-184, DISPERBIK-190, DISPERBIK-2000, DISPERBIK-2001 (these products are of BYK-Chemie Co.), Lupazol (a polyethyleneimine-based compound) and Tamol (a sulfonic acid-based compound) (these products are of BASF Co.), and a thiol-terminated polymer (product of Polymer Source Inc.) (e.g., a thiol-terminated polyethylene glycol and thiol-terminated polystyrene glycol). These may be used alone or in combination.

(Composite metal nanorod-containing composition)

A composite metal nanorod-containing composition of the present invention contains the composite metal nanorod of the present invention and a binder; and, if necessary, contains other components.

The binder is not particularly limited, so long as it is a thermoplastic resin having high optical transparency, and may be appropriately selected depending on the purpose. Examples thereof include polyvinyl acetal resins, polyvinyl alcohol resins, polyvinyl butyral resins, polymethyl methacrylate resins, polycarbonate resins, polyvinyl chloride resins, saturated polyester resins and polyurethane resins. These may be used alone or in combination.

Examples of the other components include solvents, dispersants, surfactants, antioxidants, antirust agents, UV-ray absorbers, heat ray-shielding agents, humidity resistance improvers, heat resistance agents, pigments, metal oxides and metal nitrides conductive particles.

The solvent is not particularly limited and may be appropriately selected depending on the purpose. Examples thereof include water; alcohol solvents such as methanol, ethanol, n-propanol, isopropanol, t-butyl alcohol, glycerin, ethylene glycol, triethylene glycol, ethylene glycol monomethyl ether, diethylene glycol dimethyl ether, propylene glycol, dipropylene glycol and 2-methyl-2,4-pentanediol; ketone solvents such as acetone, methyl ethyl ketone (MEK), methyl isobutyl ketone, cyclohexanone, cyclopentanone, 2-pyrrolidone and N-methyl-2-pyrrolidone; ester solvents such as ethyl acetate and butyl acetate; amide solvents such as dimethylformamide and dimethylacetamide; nitrile solvents such as acetonitrile; ether solvents such as diethyl ether, dibutyl ether, tetrahydrofuran and dioxane; and chloroform. These solvents may be used alone or in combination.

The dispersing agent is not particularly limited, so long as it is a compound capable of preventing nanorods from aggregation through charge repulsion and/or stearic hindrance with being adsorbed thereon and of imparting water-solubility and/or oil solubility to nanorods, and may be appropriately selected depending on the purpose.

Examples of the compound capable of preventing nanorods from aggregation through charge repulsion include high-molecular-weight ionic compounds and low-molecular-weight ionic compounds (e.g., quaternary ammonium compounds, sulfonic acid compounds, phosphoric acid compounds and carboxylic acid compounds). From them, a compound used can be selected in consideration of suface potential and/or pH conditions (acidity or basicity) of particles intended to be dispersed.

The compound capable of preventing nanorods from aggregation through stearic hindrance may contain a group for adsorbing on the particle surface and a moiety for stearic hindrance. Preferred examples of the group include S-containing functional groups (e.g., thiol, disulfide and sulfoxide); P-containing functional groups (e.g., phosphoric acid and phosphine); O-containing functional groups (e.g., carbonyl, carboxyl, ether and hydroxy); and N-containing functional groups (e.g., amine, amino, ammonium, nitro, hydroxylamine, azo and imine). Specific examples include DISPERBIK-180, DISPERBIK-184, DISPERBIK-190, DISPERBIK-2000, DISPERBIK-2001 (these products are of BYK-Chemie Co.), Lupazol (a polyethyleneimine-based compound) and Tamol (a sulfonic acid-based compound) (these products are of BASF Co.), and a thiol-terminated polymer (e.g., a thiol-terminated polyethylene glycol and thiol-terminated polystyrene glycol) (product of Polymer Source Inc.). These may be used alone or in combination.

The surfactant is not particularly limited and may be appropriately selected depending on the purpose. Examples thereof include nonionic surfactants, cationic surfactants, anionic surfactants and amphoteric surfactants.

Examples of the nonionic surfactants include polyoxyethylene alkyl ethers, polyoxyethylene alkyl phenol ethers, alkyl glucoxides, polyoxyethylene fatty acid esters, sucrose fatty acid esters, sorbitan fatty acid esters, polyoxyethylene sorbitan fatty acid esters and fatty acid alkanolamides.

Examples of the cationic surfactants include alkyltrimethyl ammonium salts, dialkyldimethyl ammonium salts, alkyldimethylbenzyl ammonium salts and amine salts.

Examples of the anionic surfactants include soaps (fatty acid sodium/potassium salts), alkylbenzenesulfonic acid salts, higher alcohol sulfuric acid ether salts, polyoxyethylene alkyl ether sulfuric acid salts, $\alpha$-sulfo fatty acid esters, $\alpha$-olefin sulfonic acid salts, monoalkyl phosphoric acid ester salts and alkane sulfonic acid salts.

Examples of the amphoteric surfactants include alkylamino fatty acid salts, alkylbetaines and alkyl amine oxides.

These may be used alone or in combination.

Examples of the antioxidants include ascorbic acid, citric acid, polyvinyl alcohol resins and triazole compounds. These may be used alone or in combination.

Notably, the composite metal nanorod-containing composition may additionally contain a crosslinking agent and/or plasticizer, in order to improve the quality of a film formed therefrom. For example, when a firm film is intended to be formed, a crosslinking agent (e.g., boric acid) is added to the composition. In contrast, when a flexible film is intended to be formed, a plasticizer (e.g., glycerin) is added to the composition. The crosslinking agent and plasticizer may be incorporated during film formation. Alternatively, they may be applied through wet coating after film formation or film stretching.

Notably, a dispersing agent adsorbed on the surfaces of composite metal nanorods may be appropriately substituted with another dispersing agent in consideration of compatibility to a solvent and binder used.

Also, other particles than the composite metal nanorods may be mixed with the composition so that the resultant composition has various properties such as UV and/or heat ray-absorbing property and has the same refractive index as glass. For example, the composition may be provided with UV ray-absorbing property and/or heat ray-shielding property through addition of semiconductive metal oxide particles.

The composite metal nanorod-containing composition of the present invention contains the composite metal nanorod of the present invention and can be used in various applications. Among others, it is particularly preferably used as a below-described polarization material of the present invention.

(Polarization material)

A polarization material of the present invention is formed from the above-described composite metal nanorod-containing composition of the present invention.

In this case, preferably, a film formed from the composite metal nanorod-containing composition is stretched so that the major axes of the composite metal nanorods are oriented in a direction in which the composition is stretched.

Examples of methods in which the major axes of the composite metal nanorods are oriented include stretching, flow-induced orientation with coating (e.g., web coating, bar coating, die coating, gravure coating, dip coating, the Langmuir-Blodgett method), orientation with shear stress, orientation through self-organization utilizing Benard convention during film drying, orientation utilizing high-viscosity fluid, orientation through ejection from micro-flow paths, orientation through electrospinning, and orientation including coating on a support whose surface has been treated through web rubbing or nanoimprinting so as to have fine grooves. These may be used alone or in combination to improve their orientation.

The polarization material of the present invention can be used for projectors, liquid crystal monitors, liquid crystal TVs, etc. In addition, it can be used as light isolators, optical fibers, glass for various kinds of vehicles such as automobiles, buses, autotrucks, electric trains, super express trains, airplanes and vessels; and additionally used in various fields, as glass for building materials such as opening and partition in buildings, for example, common houses, complex housings, office buildings, stores, community facilities and industrial plants. Among them, it is particularly preferably used as vehicles' glass such as the front glass of automobiles as disclosed in JP-A No. 2007-334150.

The vehicles' glass such as the front glass of automobiles is preferably a laminated glass.

The laminated glass is made by sandwiching an intermediate layer with two flat glasses to form a single piece. Even when such a laminated glass is broken by external impact, broken glass pieces do not scatter, that is, the laminated glass is safe. Thus, it is commonly used as the front glass of vehicles (e.g., automobiles) and window glasses of, for example, buildings. The intermediate layer preferably contains the polarization material of the present invention.

Examples

The present invention will next be described by way of examples, which should not be construed as limiting the present invention thereto.

(Example 1)

- Synthesis step of gold nanoparticles (seed crystals) -

A 10 mM aqueous chloroauric acid solution (product of KANTO KAGAKU. K.K.) (5 mL) was added to a 100 mM aqueous CTAB (cetyltrimethylammonium bromide, product of Wako Pure Chemical Industries, Ltd.) solution (100 mL). Subsequently, a 10 mM aqueous sodium borohydride solution (10 mL) was prepared and immediately added to the above-prepared chloroauric acid-CTAB mixture. The resultant mixture was vigorously stirred to form gold nanoparticles (seed crystals).

- Gold nanorods (core nanorods) synthesizing step -

A 10 mM aqueous silver nitrate solution (100 mL), a 10 mM aqueous chloroauric acid solution (200 mL) and a 100 mM aqueous ascorbic acid solution (50 mL) were added to a 100 mM aqueous CTAB solution (1,000 mL), followed by stirring, to thereby prepare a colorless, transparent liquid. Thereafter, the above-prepared aqueous gold nanoparticles (seed crystals) solution (100 mL) was added to the resultant liquid, followed by stirring for 2 hours, to thereby prepare an aqueous gold nanorod solution.

< Evaluation of gold nanorods >

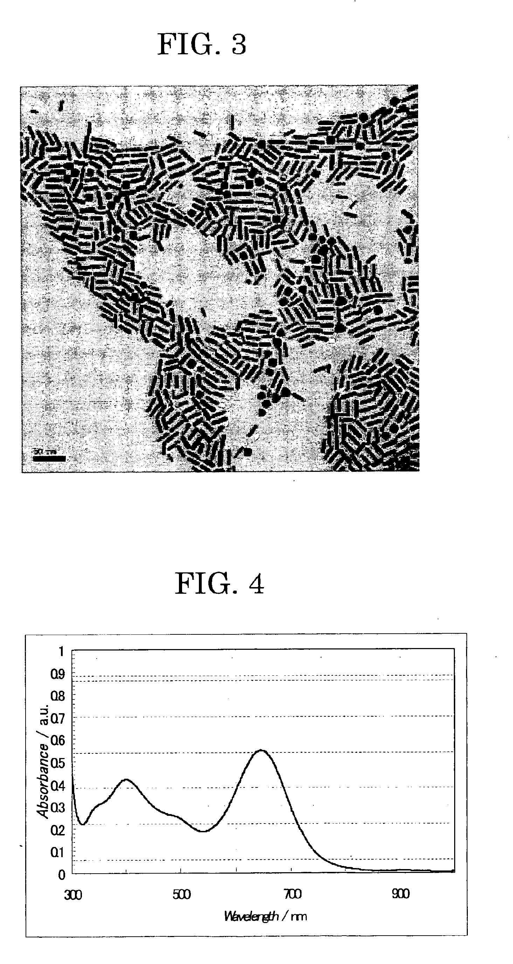

The thus-obtained gold nanorods were measured for absorption spectrum using a UV-Vis infrared spectrometer (V-670, product of JASCO Corporation). From the obtained spectral chart, the gold nanorods were found to show absorption at 510 nm attributed to their minor axes and that at 800 nm attributed to their major axes.
The gold nanorods were observed with a transmission electron microscope (TEM) for short and long diameters, aspect ratio and equivalent-volume-sphere radius. As shown in a TEM image of FIG. 3, rod-like particles were found to have a short diameter of 6 nm, a long diameter of 21 nm, an aspect ratio of 3.5, and an equivalent-volume-sphere radius of 5.7 nm. The results are shown in Table 1.

- Silver shell forming step -

The above-prepared gold nanorod dispersion (2 kg), a 10 mM aqueous silver nitrate solution (100 mL) and a 100 mM aqueous ascorbic acid solution (100 mL) were added to a 1% by mass aqueous PVP (polyvinylpyrrolidone K30, product of Wako Pure Chemical Industries, Ltd.) solution (8 kg), followed by stirring. Subsequently, a 0.1N aqueous sodium hydroxide solution (280 mL) was added to the resultant mixture over 5 min so that the pH thereof was adjusted to 7 to 8. In this manner, silver was precipitated on the surfaces of the gold nanorods to synthesize gold core-silver shell nanorods.
The thus-obtained gold core-silver shell nanorod dispersion was 10-fold concentrated through ultrafiltration with a ultrafiltration membrane (ACP0013, product of Asahi Kasei Chemicals Corporation). Then, the thus-concentrated dispersion was purified until the electric conductivity thereof reached 70 mS/m or lower, to thereby prepare a gold core-silver shell nanorod dispersion.
Next, the thus-obtained gold core-silver shell nanorod dispersion was measured, as follows, for optical characteristics, particle size, equivalent-volume-sphere radius, shell/core nanorod volume ratio and end surface shape. The results are shown in Table 1.

< Optical characteristics >

The obtained gold core-silver shell nanorods were measured for absorption spectrum using a UV-Vis infrared spectrometer (V-670, product of JASCO Corporation). As shown in FIG. 4, the gold core-silver shell nanorods were found to show absorption at 410 nm attributed to their minor axes and that at 650 nm attributed to their major axes.

< Measurement of particle size, equivalent-volume-sphere radius, shell/core nanorod volume ratio and end surface shape >

Under a transmission electron microscope (TEM) (EX1200, product of JEOL Ltd.), each particle was measured for short and long diameters, aspect ratio and end surface shape. The aspect ratio was obtained by averaging those of randomly selected 200 particles on the obtained TEM image using an image processing device (Macview (Ver. 3), product of Mountech Co.).

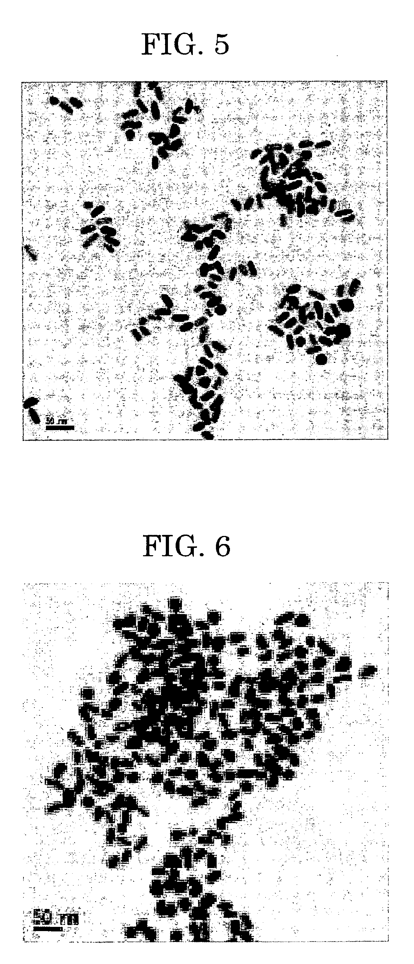

FIG. 5 is a TEM image of the gold core-silver shell nanorods produced in Example 1.

- Measurement of equivalent-volume-sphere radius -

The equivalent-volume-sphere radius is a radius of a sphere whose volume is the same as that of the nanorod, and was calculated depending on its shape by the following equations.

That is, when the shape was generally cylindrical,

$$R = \sqrt[3]{3 \times A \times B \times B / 16}$$

where A denotes a major axis length of the nanorod, which length was obtained by measuring a length of the longest straight line between both ends of the nanorod; and B denotes a minor axis length of the nanorod, which length was obtained by measuring a width of the thickest part of the nanorod. Also, when the shape was generally cuboid,

$$R = \sqrt[3]{3 \times A \times B \times B / 4 / \pi}$$

where A denotes a major axis length of the nanorod, which length was obtained by measuring a length of the longest straight line between both ends of the nanorod; and B denotes a minor axis length of the nanorod, which length was obtained by measuring a width of the thickest part of the nanorod.

Here, whether a shape of a nanorod is generally cylindrical or generally cuboid was determined based on that of the nanorod observed with a transmission electron microscope (TEM). When a nanorod satisfies the expression $L \leq 0.2B$ (where L denotes a length of a flat portion of an end surface (cap) of the nanorod, and B denotes a minor axis length of the nanorod), a shape of the nanorod was determined to be generally cylindrical (e.g., a composite metal nanorod whose end surface is spherical (indicated by C or E in FIG. 12), that whose end surface is ellipsoidal (indicated by D in FIG. 12), and that having an ellipsoidal shape (indicated by F in FIG. 12)).

Meanwhile, when a composite metal nanorod satisfies the expression $0.2B < L \leq 0.9B$ (where L denotes a length of a flat portion of an end surface (cap) of the composite metal nanorod, and B denotes a minor axis length of the composite metal nanorod), a shape of the composite metal nanorod was determined to be generally cuboid (e.g., a composite metal nanorod whose end surface is polyhedral (indicated by A or B in FIG. 12)).

Also, the end surface (cap) shape of a composite metal nanorod was determined by measuring randomly selected 200 particles on the TEM image with a digital slide caliper in terms of necessary values.

- Shell/core nanorod volume ratio -

The ratio of $V_{shell}$ (i.e., the volume of the shell) to $V_{core}$ (i.e., the volume of core nanorod) (shell/core nanorod) was calculated, depending on the shapes of a composite metal nanorod and a core nanorod, by the following equations.

That is, when each of them was generally cuboid, $V_{shell} = (A \times B \times B) - V_{core}$ and $V_{core} = (a \times b \times b)$.

When each of them was generally cylindrical, $V_{shell} = (\pi \times A \times B \times B / 4) - V_{core}$ and $V_{core} = (\pi \times a \times b \times b/4)$. where A and B have the same meanings as defined above; a denotes a major axis length of the core nanorod, which length was obtained by measuring a length of the longest straight line between both ends of the core nanorod; and b denotes a minor axis length of the core nanorod, which length was obtained by measuring a width of the thickest part of the core nanorod.

(Example 2)

- Synthesis of gold core-silver shell nanorod -

The procedure of Example 1 was repeated, except that the amount of the 10 mM aqueous silver nitrate solution used in the silver shell forming step was changed to 25 mL, to thereby produce a gold core-silver shell nanorod dispersion.

Similar to Example 1, the thus-produced gold core-silver shell nanorod dispersion was measured for optical characteristics, particle size, equivalent-volume-sphere radius, shell/core nanorod volume ratio and end surface shape. The results are shown in Table 1.

(Example 3)

- Synthesis of gold core-silver shell nanorod -

The procedure of Example 1 was repeated, except that the amount of the 10 mM aqueous silver nitrate solution used in the silver shell forming step was changed to 55 mL, to thereby produce a gold core-silver shell nanorod dispersion.
Similar to Example 1, the thus-produced gold core-silver shell nanorod dispersion was measured for optical characteristics, particle size, equivalent-volume-sphere radius, shell/core nanorod volume ratio and end surface shape. The results are shown in Table 1.

(Example 4)

- Synthesis of gold core-silver shell nanorod -

The procedure of Example 1 was repeated, except that the amount of the 10 mM aqueous silver nitrate solution used in the silver shell forming step was changed to 150 mL, to thereby produce a gold core-silver shell nanorod dispersion.
Similar to Example 1, the thus-produced gold core-silver shell nanorod dispersion was measured for optical characteristics, particle size, equivalent-volume-sphere radius, shell/core nanorod volume ratio and end surface shape. The results are shown in Table 1.

(Example 5)

- Synthesis of gold core-silver shell nanorod -

The procedure of Example 1 was repeated, except that the amount of the 10 mM aqueous silver nitrate solution used in the silver shell forming step was changed to 200 mL, to thereby produce a gold core-silver shell nanorod dispersion.
Similar to Example 1, the thus-produced gold core-silver shell nanorod dispersion was measured for optical characteristics, particle size, equivalent-volume-sphere radius, shell/core nanorod volume ratio and end surface shape. The results are shown in Table 1.
FIG. 6 is a TEM image of the gold core-silver shell nanorods produced in Example 5.

(Example 6)

- Synthesis of gold core-silver shell nanorod -

The procedure of Example 1 was repeated, except that the amount of the aqueous gold nanoparticles (seed crystals) solution used in the gold nanorod synthesizing step was changed to 300 mL, to thereby synthesize an aqueous gold nanorod solution and gold core-silver shell nanorods.
Similar to Example 1, the thus-obtained aqueous gold nanorod solution and gold core-silver shell nanorod dispersion were measured for optical characteristics, particle size, equivalent-volume-sphere radius, shell/core nanorod volume ratio and end surface shape. The results are shown in Table 1.

(Example 7)

- Synthesis of gold core-silver shell nanorod -

The procedure of Example 1 was repeated, except that the amount of the aqueous gold nanoparticles (seed crystals) solution used in the gold nanorod synthesizing step was changed to 20 mL, to thereby synthesize an aqueous gold nanorod solution and gold core-silver shell nanorods.
Similar to Example 1, the thus-obtained aqueous gold nanorod solution and gold core-silver shell nanorod dispersion were measured for optical characteristics, particle size, equivalent-volume-sphere radius, shell/core nanorod volume ratio and end surface shape. The results are shown in Table 1.

(Comparative Example 1)

- Synthesis of gold core-silver shell nanorod -

An aqueous gold nanorod solution and a gold core-silver shell composite nanorod dispersion were produced in accordance with the procedure described in J. Phys. Chem. B, 108 (2004), pp. 5,882 to 5,888.

Similar to Example 1, the thus-obtained aqueous gold nanorod solution and gold core-silver shell composite nanorod dispersion were measured for optical characteristics, particle size, equivalent-volume-sphere radius, shell/core nanorod volume ratio and end surface shape. The results are shown in Table 1.

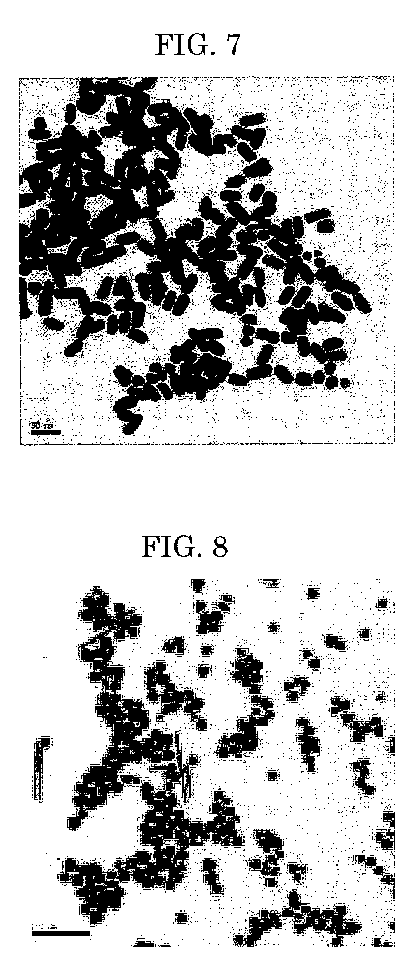

FIG. 7 is a TEM image of the gold core-silver shell nanorods produced in Comparative Example 1.

(Comparative Example 2)

- Synthesis of silver nanorod -

Silver nanorods were synthesized in accordance with the procedure descrived in Chem. Comm., 7 (2001), pp. 617 and 618.

Similar to Example 1, the thus-obtained silver nanorod dispersion was measured for optical characteristics, particle size, equivalent-volume-sphere radius, shell/core nanorod volume ratio, end surface shape, etc. The results are shown in Table 1.

FIG. 8 is a TEM image of the silver nanorods produced in Comparative Example 2.

(Comparative Example 3)

- Synthesis of gold core-silver shell nanoparticles -

An aqueous gold nanorod solution and gold core-silver shell nanorods were synthesized in accordance with the procedure of Example 2 of JP-A No. 2004-256915.

Similar to Example 1, the thus-obtained aqueous gold nanorod solution and gold core-silver shell nanorod dispersion were measured for optical characteristics, particle size, equivalent-volume-sphere radius, shell/core nanorod volume ratio and end surface shape. The results are shown in Table 1.

(Comparative Example 4)

- Synthesis of gold nanorod -

The procedure of Example 1 was repeated, except that no silver shell forming step was performed, to thereby synthesize gold nanorods.

Similar to Example 1, the thus-obtained gold nanorods were measured for optical characteristics, particle size, equivalent-volume-sphere radius, shell/core nanorod volume ratio and end surface shape. The results are shown in Table 1.

(Comparative Example 5)

- Synthesis of gold core-silver shell nanorods -

The procedure of Example 1 was repeated, except that the amounts of the 10 mM aqueous chloroauric acid solution and the 100 mM aqueous ascorbic acid solution used in the gold nanorod synthesizing step were changed respectively to 1,400 mL and 350 mL, and that the amounts of the 10 mM aqueous silver nitrate solution, the 100 mM aqueous ascorbic acid solution and the 0.1N aqueous sodium hydroxide solution used in the silver shell forming step were changed repectively to 700 mL, 500 mL and 800 mL, to thereby produce an aqueous gold nanorod solution and a gold core-silver shell nanorod dispersion.

Similar to Example 1, the thus-obtained aqueous gold nanorod solution and gold core-silver shell nanorod dispersion were measured for optical characteristics, particle size, equivalent-volume-sphere radius, shell/core nanorod volume ratio and end surface shape. The results are shown in Table 1.

(Comparative Example 6)

- Synthesis of gold core-silver shell nanorods -

The procedure of Example 1 was repeated, except that the amounts of the aqueous gold nanoparticles (seed crystals) solution used in the gold nanorod synthesizing step and the 100 mM aqueous ascorbic acid solution used in the silver shell forming step were changed respectively to 20 mL and 200 mL, to thereby produce an aqueous gold nanorod solution and a gold core-silver shell nanorod dispersion.

Similar to Example 1, the thus-obtained aqueous gold nanorod solution and gold core-silver shell nanorod dispersion were measured for optical characteristics, particle size, equivalent-volume-sphere radius, shell/core nanorod volume ratio and end surface shape. The results are shown in Table 1.

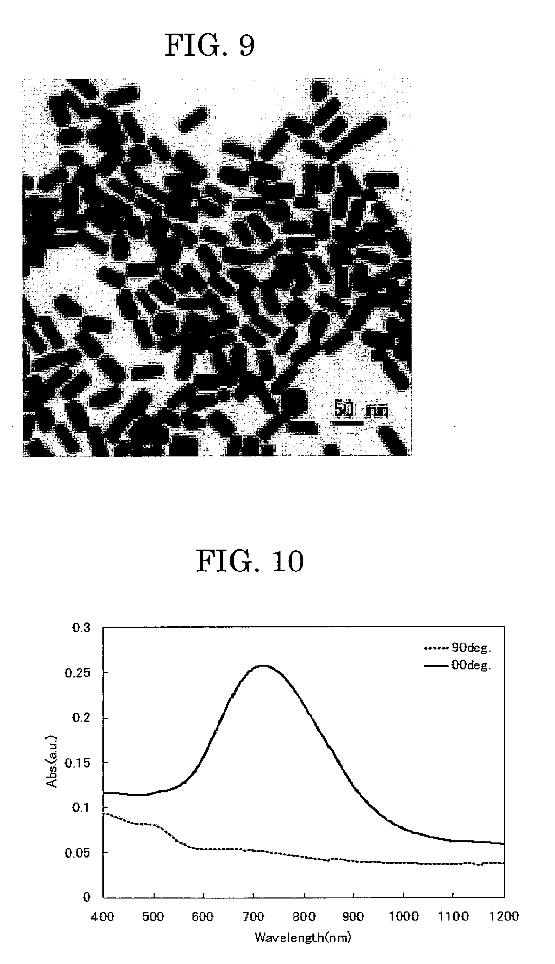

FIG. 9 is a TEM image of the gold core-silver shell nanorods produced in Comparative Example 6.

Next, the above-produced nanorods and nanoparticles were evaluated as follows for scattering intensity, the presence or absence of side absorption by the minor axis, and oxidation resistance. The results are shown in Table 1.

< Scattering intensity >

A quartz cell (optical path length: 10 mm) to which each metal nanoparticle dispersion had been added was placed a space defined by base and back black paper sheets. Then, the quartz cell was irradiated with light from a flashlight at an angle of 45° with respect to the base black paper sheet, and the turbidity of the metal nanoparticle dispersion was evaluated as its scattering intensity.

< Presence or absence of side absorption by minor axes >

The presence or absence of side absorption by minor axes was determined based on the absorption spectrum of composite metal nanorods.

< Evaluation of oxidation resistance >

Each (0.1 mL) of the above-obtained gold core-silver shell nanorod dispersions and pure water (4.0 mL) were mixed with each other. Subsequently, a 1% by mass hydrogen peroxide solution (0.1 mL) was added to the obtained mixture. The resultant mixture was measured for change in absorbance and evaluated for oxidation resistance according to the following criteria.

[Evaluation criteria]

A: No change observed in maximum absorption wavelength or absorbance after the sample had been left to stand at room temperature for 10 days

B: Changes observed in maximum absorption wavelength and absorbance after the sample had been left to stand at room temperature for 10 days

Table 1-1

| | Core particle | | | | Core-shell composite metal particle | | | | Scattering intensity |
|---|---|---|---|---|---|---|---|---|---|
| | Short diameter b (nm) | Long diameter a (nm) | Aspect ratio t | Equivalent-volume-sphere radius (nm) | Short diameter B (nm) | Long diameter A (nm) | Aspect ratio T | Equivalent-volume-sphere radius R (nm) | |
| Ex. 1 | 6 | 1 | 3.5 | 5.7 | 12 | 24 | 2.0 | 9.4 | Low |
| Ex. 2 | 6 | 21 | 3.5 | 5.7 | 8 | 22 | 2.8 | 7.0 | Low |
| Ex. 3 | 6 | 21 | 3.5 | 5.7 | 10 | 23 | 2.3 | 8.2 | Low |
| Ex. 4 | 6 | 21 | 3.5 | 5.7 | 14 | 25 | 1.8 | 10.5 | Low |
| Ex. 5 | 6 | 21 | 3.5 | 5.7 | 16 | 26 | 1.6 | 11.7 | Low |
| Ex. 6 | 4 | 14 | 3.5 | 3.8 | 8 | 16 | 2.0 | 6.3 | Low |
| Ex. 7 | 10 | 35 | 3.5 | 9.4 | 16 | 39 | 2.4 | 13.4 | Medium |
| Comp. Ex. 1 | 12 | 42 | 3.5 | 11.3 | 24 | 48 | 2.0 | 18.8 | High |
| Comp. Ex. 2 | 15 | 184 | 12.3 | 21.5 | - | - | - | - | High |
| Comp. Ex. 3 | 15 | 15 | 1.0 | 15.0 | 19 | 19 | 1.0 | 19.0 | High |
| Camp. Ex. 4 | 12 | 42 | 3.5 | 11.3 | - | - | - | - | Low |
| Comp. Ex. 5 | 5 | 125 | 25 | 9.1 | 11 | 128 | 11.6 | 15.5 | High |
| Comp. Ex. 6 | 12 | 42 | 3.5 | 11.3 | 25 | 50 | 2.0 | 19.5 | High |

Table 1-2

| | $V_{shell}/V_{core}$ ($V_{Ag}/V_{Au}$) | Max. absorption wavelength (nm) | End surface shape of nanorod (presence or absence of corners) | L/B | Wavelength of light absorbed by minor axes (nm) | Presence or absence of side absorption by minor axes | Oxidation resistance |
|---|---|---|---|---|---|---|---|
| Ex. 1 | 3.6 | 650 | Absence | 0.4 | 410 | Absence | A (unchanged) |
| Ex. 2 | 0.9 | 710 | Absence | 0.7 | 410 | Absence | A (unchanged) |
| Ex. 3 | 2.0 | 670 | Absence | 0.4 | 410 | Absence | A (unchanged) |
| Ex. 4 | 5.5 | 590 | Absence | 0.3 | 408 | Absence | A (unchanged) |
| Ex. 5 | 7.8 | 560 | Absence | 0.4 | 408 | Absence | A (unchanged) |
| Ex. 6 | 3.6 | 650 | Absence | 0.2 | 410 | Absence | A (unchanged) |
| Ex. 7 | 1.9 | 680 | Absence | 0.2 | 407 | Absence | A (unchanged) |
| Comp. Ex. 1 | 3.6 | 650 | Absence | 0.7 | 408 | Absence | A (unchanged) |
| Comp. Ex. 2 | - | 580 | Absence | 0.1 | 410 | Absence | B (changed) |
| Comp. Ex. 3 | 1.0 | 493 | - | 0.1 | - | Absence | A (unchanged) |
| Comp. Ex. 4 | - | 800 | Absence | 1.1 | 510 | Absence | A (unchanged) |
| Comp. Ex. 5 | 4.0 | - | Absence | 0.4 | 410 | - | A (unchanged) |
| Comp. Ex. 6 | 4.2 | 650 | Presence | 0.9 | 408 | Presence | A (unchanged) |

(Example 8)

< Formation of gold core-silver shell nanorod-containing PVA film >

- Removal of CTAB -

The aqueous gold nanorod solution produced in Example 1 was left to stand at 5°C for 12 hours. The precipitated CTAB crystals were separated through filtration with a filter fabric (#200), to thereby prepare a gold nanorod dispersion from which CTAB had been roughly removed. In this treatment, the recovery rate of CTAB was found to be about 75%.
Similar to Example 1, the thus-obtained gold nanorod dispersion was used to form gold core-silver shell nanorods. The thus-obtained gold core-silver shell nanorod dispersion was 10-fold concentrated through ultrafiltration with a ultrafiltration membrane (ACP0013, product of Asahi Kasei Chemicals Corporation). Then, the thus-concentrated dispersion was purified until the electric conductivity thereof reached 70 mS/m or lower, to thereby prepare a gold core-silver shell nanorod dispersion.

- Formation of gold core-silver shell nanorod-containing PVA film -

Subsequently, the thus-obtained gold core-silver shell nanorod dispersion (1.0 g) was mixed with a 10% by mass aqueous PVA124 solution (product of KURARAY CO., LTD.) (10.0 g) and pure water (10.0 g). Separately, an applicator having a thickness of 1 mm was placed on a clean PET base (thickness: 200 $\mu$m, product of TOYOBO, CO., LTD.). The resultant mixture was applied thereon through bar coating with a coating bar (#0), followed by drying at room temperature for 12 hours. The dried PVA film was peeled off from the PET base, to thereby form a gold core-silver shell nanorod-containing PVA film having a thickness of 40 $\mu$m.

< Measurement of spectrum >

The obtained PVA film was measured for absorption spectrum using a UV-Vis infrared spectrometer (V-670, product of JASCO Corporation), and was found to exhibit absorption by gold-silver composite nanorods.

< Measurement of haze value >

The PVA film was measured for a haze value with a haze meter (NDH2000, product of NIPPON DENSHOKU INDUSTRIES CO., LTD.) and was found to have a haze value of 1.8%.

< Production suitability for laminated glass >

The gold core-silver shell nanorod-containing PVA film was sandwiched between two polybutyral films (thickness: 300 $\mu$m) and two clear glasses (thickness: 1 mm), followed by heating at 150°C for 1 hour in a clean oven, to thereby produce a laminated glass.
The laminated glass was measured for absorption spectrum and evaluated according to the following criteria:

A: No change observed in absorption characteristics between gold core-silver shell nanorods heated and those unheated, and
B: Change observed in absorption characteristics between gold core-silver shell nanorods heated and those unheated. The results are shown in Table 2.

- Production of polarization plate. -

The obtained PVA film (thickness: 40 $\mu$m) was 4-fold uniaxially stretched using an automatic biaxially stretching apparatus while being heated at 90°C, to thereby produce a polarization film (polarization plate).

< Orientation degree >

The obtained polarization plate was evaluated for polarization property. Specifically, one polarizer was placed at an optical light path for a sample in a UV-Vis infrared spectrometer (V-670, product of JASCO Corporation), and the polarization spectrum of the polarization plate was measured at an angle of 0° or 90° formed between the polarizer and the stretching axis of the polarization plate. The results are shown in FIG. 10. Based on spectra obtained at angles of 0° and 90°, there was calculated orientation degree S; i.e., the ratio of absorbance at a maximum absorption wavelength by major axes of gold-silver composite nanorods at 0° to that at 90°. The orientation degree S is calculated by the Formula 1 given below. The polarization plate of Example 8 was found to have an orientation degree of 0.94.

Formula 1

$$S = (A_{0\ deg.} - A_{90\ deg.}) / (A_{0\ deg.} + 2A_{90\ deg.})$$

< Production suitability for laminated glass >

The obtained polarization plate was sandwiched between two polybutyral films (thickness: 300 $\mu$m) and two clear glasses (thickness: 1 mm), followed by heating at 150°C for 1 hour in a clean oven, to thereby produce a laminated glass.
The thus-produced laminated glass was measured for absorption spectrum and evaluated according to the following criteria:

A: No change observed in absorption characteristics between gold core-silver shell nanorods heated and those unheated, and

B: Change observed in absorption characteristics between gold core-silver shell nanorods heated and those unheated. The results are shown in Table 2.

(Examples 9 to 14 and Comparative Examples 7 to 12)

The procedure of Example 8 was repeated, except that the gold core-silver shell nanorod dispersion was changed to a particle dispersion produced in each of Examples 2 to 7 and Comparative Examples 1 to 6 as shown in Table 2, to thereby produce PVA films and polarization plates of Examples 9 to 14 and Comparative Examples 7 to 12.

Similar to Example 8, each of the produced films was evaluated for a haze value and production suitability for a laminated glass, and each of the produced polarization plates was evaluated for orientation degree and production suitability for a laminated glass. The results are shown in Table 2.

Table 2

| | Particle dispersion | Haze value (%) | Production suitability for laminated glass | Orientation degree |
|---|---|---|---|---|
| Ex. 8 | Ex. 1 | 1.8 | A (unchanged) | 0.94 |
| Ex. 9 | Ex. 2 | 1.6 | A (unchanged) | 0.95 |
| Ex. 10 | Ex. 3 | 1.6 | A (unchanged) | 0.93 |
| Ex. 11 | Ex. 4 | 1.8 | A (unchanged) | 0.91 |
| Ex. 12 | Ex. 5 | 2.0 | A (unchanged) | 0.89 |
| Ex. 13 | Ex. 6 | 1.1 | A (unchanged) | 0.94 |
| Ex. 14 | Ex. 7 | 2.5 | A (unchanged) | 0.95 |
| Comp. Ex. 7 | Comp. Ex.1 | 4.5 | A (unchanged) | 0.95 |
| Comp. Ex. 8 | Comp. Ex. 2 | 3.1 | B (changed) | - |
| Comp. Ex. 9 | Comp. Ex. 3 | 4.3 | A (unchanged) | - |
| Comp. Ex. 10 | Comp. Ex. 4 | 1.8 | B (changed) | - |
| Comp. Ex. 11 | Comp. Ex. 5 | 2.9 | B (changed) | 0.98 |
| Comp. Ex. 12 | Comp. Ex. 6 | 4.7 | A (unchanged) | 0.95 |

The composite metal nanorods of the present invention have a uniform size, exhibit less light scattering, are excellent in heat resistance and oxidation resistance, and have dichroism property and thus, are preferably used in, for example, polarization materials.

The polarization material of the present invention can be used as projectors, liquid crystal monitors, liquid crystal TVs, etc. In addition, it can be used as light isolators, optical fibers, glass for various kinds of vehicles such as automobiles, buses, autotrucks, electric trains, super express trains, airplanes and vessels; and additionally used in various fields, as glass for building materials such as opening and partition in buildings, for example, common houses, complex housings, office buildings, stores, community facilities and industrial plants.

## Claims

1. A composite metal nanorod, comprising:

a core nanorod, and
a shell,
the core nanorod being covered with the shell to form a core-shell structure,

wherein the composite metal nanorod contains at least two different metals, and
wherein the composite metal nanorod has an equivalent-volume-sphere radius of 15 nm or smaller and has an aspect ratio of 1.1 to 10.

2. The composite metal nanorod according to claim 1, wherein both end surfaces of the composite metal nanorod are rounded and have no corners.

3. The composite metal nanorod according to claim 2, wherein the composite metal nanorod satisfies the expression $L \leq 0.9B$, where L denotes a length of a portion of the end surface of the composite metal nanorod, the portion being in contact with a perpendicular line to a major axis of the composite metal nanorod; and B denotes a length of a minor axis of the composite metal nanorod.

4. The composite metal nanorod according to any one of claims 1 to 3, wherein a shell metal of the shell is baser than a core metal of the core nanorod.

5. The composite metal nanorod according to claim 4, wherein the core metal is any of gold, platinum and palladium, and the shell metal is any of silver, copper and aluminum.

6. The composite metal nanorod according to any one of claims 1 to 5, wherein a ratio by volume of the shell to the core nanorod (shell/core nanorod) is 0.1 to 130.

7. The composite metal nanorod according to any one of claims 1 to 6, wherein the core nanorod has an equivalent-volume-sphere radius of 10 nm or smaller and has an aspect ratio of 1.5 to 24.

8. A composite metal nanorod-containing dispersion, comprising:

   the composite metal nanorod according to any one of claims 1 to 7.

9. A composite metal nanorod-containing composition, comprising:

   a binder, and
   the composite metal nanorod according to any one of claims 1 to 7.

10. A polarization material comprising:

   the composite metal nanorod-containing composition according to claim 9.

11. The polarization material according to claim 10, wherein the polarization material is a film made of the composite metal nanorod-containing composition, which film is stretched so that a major axis of the composite metal nanorod is oriented in a direction in which the film is stretched.

FIG. 1

FIG. 2

# FIG. 3

# FIG. 4

## FIG. 5

## FIG. 6

FIG. 7

FIG. 8

# FIG. 9

# FIG. 10

## FIG. 11A

L>0.9B

## FIG. 11B

L≦0.9B

## FIG. 11C

L≦0.9B

# FIG. 12

X

A

B     Flat portion L

C

D     E     F

C<R     C≒R

# FIG. 13A

# FIG. 13B

# FIG. 13C

# FIG. 13D

# FIG. 13E

## FIG. 13F

## FIG. 13G

## FIG. 13H

## FIG. 14A

## FIG. 14B

FIG. 14C

FIG. 15

FIG. 16

**EUROPEAN SEARCH REPORT**

Europäisches
Patentamt
European
Patent Office
Office européen
des brevets

Application Number

EP 09 01 0659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEE SONG J ET AL: "Crystal overgrowth on gold nanorods: Tuning the shape, facet, aspect ratio, and composition of the nanorods" CHEMISTRY - A EUROPEAN JOURNAL, vol. 11, no. 3, 9 December 2004 (2004-12-09), pages 910-916, XP002553269 WILEY-VCH VERLAG [DE] | 1-8 | INV. B22F9/24 B22F1/00 G02B5/30 G02F1/13363 C23C18/24 ADD. G02F1/1335 |
| Y | * pages 913-916; figures 7-10 * ----- | 10,11 | |
| X | LIU M ET AL: "Synthesis and optical characterization of Au/Ag core/shell nanorods" JOURNAL OF PHYSICAL CHEMISTRY B, vol. 108, no. 19, 13 May 2004 (2004-05-13), pages 5882-5888, XP002553270 AMERICAN CHEMICAL SOCIETY [US] | 1-9 | |
| Y | * the whole document * ----- | 10,11 | |
| Y | PÉREZ-JUSTE J ET AL: "Optical control and patterning of gold-nanorod-poly(vinyl alcohol) nanocomposite films" ADVANCED FUNCTIONAL MATERIALS, vol. 15, no. 7, 13 April 2005 (2005-04-13), pages 1065-1071, XP002553271 WILEY-VCH VERLAG [DE] ISSN: 1616-301X * the whole document * ----- | 10,11 | TECHNICAL FIELDS SEARCHED (IPC) B22F G02B G02F C23C |
| Y | WO 2007/145022 A (FUJIFILM CORP [JP]; KAMADA KOU [JP]; MATSUNAMI YUKI [JP]) 21 December 2007 (2007-12-21) * paragraphs [0132], [0134], [0162] - [0167]; figures 1A-1D; example 1 * & EP 2 034 339 A (FUJIFILM CORP [JP]) 11 March 2009 (2009-03-11) ----- | 10,11 | |

The present search report has been drawn up for all claims

| Place of search | Date of completion of the search | Examiner |
|---|---|---|
| Munich | 2 November 2009 | Hoyer, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 01 0659

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2009

| Patent document cited in search report | | Publication date | Patent family member(s) | | Publication date |
|---|---|---|---|---|---|
| WO 2007145022 | A | 21-12-2007 | CN | 101467080 A | 24-06-2009 |
| | | | EP | 2034339 A1 | 11-03-2009 |
| | | | JP | 2007334150 A | 27-12-2007 |
| | | | KR | 20090031374 A | 25-03-2009 |
| | | | US | 2009201583 A1 | 13-08-2009 |
| EP 2034339 | A | 11-03-2009 | CN | 101467080 A | 24-06-2009 |
| | | | JP | 2007334150 A | 27-12-2007 |
| | | | WO | 2007145022 A1 | 21-12-2007 |
| | | | KR | 20090031374 A | 25-03-2009 |
| | | | US | 2009201583 A1 | 13-08-2009 |

EPO FORM P0459

For more details about this annex : see Official Journal of the European Patent Office, No. 12/82

## REFERENCES CITED IN THE DESCRIPTION

**Patent documents cited in the description**

- JP 2004256915 A

- JP 2007334150 A

**Non-patent literature cited in the description**

- *Chem. Comm.,* 2001, vol. 7, 617, 618

- *J. Phys. Chem. B,* 2004, vol. 108, 5, 882-5888